(19)

Europäisches
Patentamt
European
Patent Office
Office européen
des brevets

(11)  **EP 2 898 721 B1**

(12)  **EUROPEAN PATENT SPECIFICATION**

(45) Date of publication and mention
of the grant of the patent:
**06.06.2018  Bulletin 2018/23**

(51) Int Cl.:
*H04W 16/28* (2009.01)    *H04W 4/12* (2009.01)
*H04W 72/12* (2009.01)    *H04B 7/04* (2017.01)
*H04B 7/06* (2006.01)    *H04L 25/03* (2006.01)

(21) Application number: **13838760.0**

(22) Date of filing: **13.09.2013**

(86) International application number:
**PCT/JP2013/075604**

(87) International publication number:
**WO 2014/046273 (27.03.2014 Gazette 2014/13)**

(54) **METHOD FOR IMPROVING TRANSMISSION CAPACITY IN A DL MU-MIMO COMMUNICATIONS SYSTEM**

VERFAHREN ZUR ERHÖHUNG DER ÜBERTRAGUNGSKAPAZITÄT IN EINEM MU-MIMO-DL-KOMMUNIKATIONSSYSTEM

PROCÉDÉ D'AMÉLIORATION DE LA CAPACITÉ DE TRANSMISSION DANS UN SYSTÈME DE COMMUNICATION MU-MIMO DL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **18.09.2012  AU 2012904070**

(43) Date of publication of application:
**29.07.2015  Bulletin 2015/31**

(73) Proprietor: **NEC Corporation**
**Tokyo 108-8001 (JP)**

(72) Inventors:
• **MARUTA, Yasushi**
**Tokyo 108-8001 (JP)**
• **PHAM, Duong**
**Mulgrave, Victoria 3170 (AU)**
• **GURUNG, Arun**
**Mulgrave, Victoria 3170 (AU)**

(74) Representative: **MacDougall, Alan John Shaw et al**
**Mathys & Squire LLP**
**The Shard**
**32 London Bridge Street**
**London SE1 9SG (GB)**

(56) References cited:
**WO-A1-2011/132727    WO-A1-2011/158302
WO-A1-2012/065278    CA-A1- 2 815 711
US-A1- 2008 165 883    US-A1- 2010 034 146
US-A1- 2010 322 176    US-A1- 2011 194 593
US-A1- 2012 093 089**

• **SONY CORPORATION: 'CQI enhancement for MU-MIMO in scenario A and C' 3GPP TSG RAN WG1 #68 R1-120127 06 February 2012, pages 1 - 5, XP050562704**

**Description**

**Technical Field**

The present invention relates methods for improving transmission capacity in a communications system. In particular although not exclusively the present invention relates to methods for enhancing transmission capacity in MU-MIMO based Communication Systems.

**Background Art**

MIMO technology has attracted attention in wireless communications as it offers significant increase in data throughput and link range without the need for additional bandwidth or increased transmit power. This increase in throughput is achieved by spreading the same total transmit power over the antennas to achieve an array gain that improves the spectral efficiency (more bits per second per hertz of bandwidth) or to achieve a diversity gain that improves the link reliability (reduced fading). Because of these properties, MIMO is an important part of modern wireless communication standards such as IEEE 802.11n (WiFi), HSPA+, 4G, 3GPP Long Term Evolution (LTE), LTE-Advanced (LTE-A), WiMAX, etc.

Multi-user MIMO or MU-MIMO is an enhanced form of MIMO technology that is gaining acceptance. MU-MIMO enables multiple independent radio terminals to access a system enhancing the communication capabilities of each individual terminal. MU-MIMO exploits the maximum system capacity by scheduling multiple users to be able to simultaneously access the same channel using the spatial degrees of freedom offered by MIMO.

CA 2815711 A1 discloses a method and device for feeding back downlink channel feedback information, and a method and device for user matching. The method for feeding back downlink channel feedback information includes: calculating the multi-user channel quality indication error of a user, which is used to reflect the difference in channel quality indication between the situation of multi-user multiple input multiple output transmission and the situation of single user multiple input multiple output transmission; adding the multi-user channel quality indication error into the downlink channel feedback information which includes pre-coding matrix indication and channel quality indication, and feeding the same back to a base station for scheduling.

WO 2012/065278 A1 discloses a method and a radio base station for selecting a first User Equipment (UE) and at least a second UE from a plurality of UEs, for sharing a transmission resource in the time-frequency dimension in a multiple input multiple output (MIMO) transmission. A first and second imperfection of Channel State Information (CSI) made available for the first UE and second UE, respectively, is estimated. Spatial correlation between the first UE and the second UE is estimated, and the first and second UE are selected to share a transmission resource in the time-frequency dimension, if both of the first and second imperfections are determined above a first threshold and the spatial correlation is determined below a second threshold.

US 2010/322176 A1 discloses that single user and multiuser MIMO transmission in a cellular network may be performed by a base station (eNB) transmitting either one or two transmission layers. A user equipment (UE) receives a reference symbol from the base station. The UE processes the reference symbol with one or more of a plurality of precoding matrices to form a plurality of channel quality indices (CQI). The UE provides feedback to the eNB comprising one or more feedback CQI selected from the plurality of CQI and one or more precoding matrix indicators (PMI) identifying the one or more precoding matrices used to form each of the one or more feedback CQIs.

US 2011/194593 A1 discloses techniques for scheduling UEs. A scheduler (e.g., for a cell) may receive channel direction information (CDI) and channel strength information (CSI) from a plurality of UEs. The CDI from each UE may include at least one eigenvector, and the CSI from each UE may include at least one singular value corresponding to the at least one eigenvector. The scheduler may schedule at least one UE among the plurality of UEs for data transmission based on the CDI and CSI from the plurality of UEs. The scheduler may select the at least one UE based on a parameter. The scheduler may evaluate the performance of different sets of UEs to determine whether to schedule one UE for single-user MIMO or multiple UEs for multi-user MIMO.

US 2010/034146 A1 discloses techniques for supporting distributed multiple-input multiple-output (MIMO) transmissions. A user equipment (UE) determines channel estimates for multiple cells and reports the channel estimates. The UE thereafter receives a data transmission sent by the multiple cells to the UE based on the channel estimates. The data transmission may include at least one data stream, and each data stream may be sent by one cell or the multiple cells to the UE.

US 2008/165883 A1 discloses a method for MIMO (multi-input multi-output-OFDM (orthogonal frequency-division multiplex)) of multi-user access systems. The method includes A) for each sub-carrier or group of sub-carriers of OFDM, grouping signature vectors of users at a time period according to correlations of the signature vectors; B) from the grouping results, selecting the signature vectors according to a scheduling rule; assigning the sub-carrier frequency and time resource to users of which simultaneously the selected signature vectors have low correlations; and assigning spatial resource to the users corresponding to the selected signature vectors.

US 2012/093089 A1 discloses a wireless communication system, method and an apparatus for selecting a UE and a precoder based on a measurement during a determined period after receiving information extracted by using channel state information from each UE in a MU-MIMO communication system, and a switching apparatus and method between modes using the same.

**Summary of Invention**

**Technical Problem**

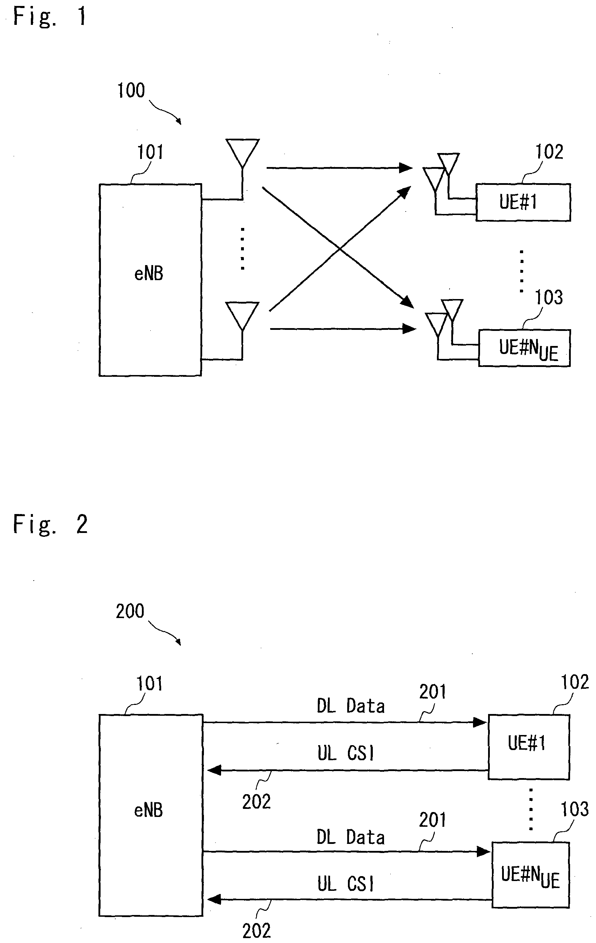

A general MU-MIMO system 100 is shown in Fig. 1. As shown the transmitter 101 transmits data to different receivers 102, 103 on the same time-frequency from multiple transmit antennas. To minimise interference between receivers 102, 103, the transmitter creates transmission beams through pre-coding. At the receiving site, the receivers 102, 103 use post-coding (decoding) to take its data. Pre-coding is very much depended on the channel status. Mathematically, a MU-MIMO system is described as follows:

$$\mathbf{y}(i) = \mathbf{H}(i)\mathbf{V}(i)\mathbf{x}(i) + \sum_{k=1, k \neq i}^{N_{UE}} \mathbf{H}(i)\mathbf{V}(k)\mathbf{x}(k) + \mathbf{n}(i) \qquad (1)$$

where: $\mathbf{y}(i)$ is the received signal at the $i$-th user, $\mathbf{x}(i)$ is the data signal for the $i$-th user, $\mathbf{H}(i)$ is the channel matrix of the $i$-th user, $\mathbf{V}(i)$ is the precoder matrix of the $i$-th user and $\mathbf{n}(i)$ is the additive white Gaussian noise at the $i$-th user.

Fig. 2 shows one possible transmission mechanism 200 utilised by the transmitter of Fig. 1 to transmit data 201 to different receivers. To minimise inter-user interference, the receivers feedback their channel status information CSI 202 (which includes Precoder Matrix Indicator PMI) to the transmitter. In a system having 2-stage codebook of PMI, the $i$-th receiver reports 2 PMIs: PMI#1 and PMI#2 denoted by $\mathbf{W}(i)$, and $\mathbf{W}(i)_2$. PMI#1 represents the long term or wideband channel and PMI#2 the short term or instant channel.

The transmitter then uses the reported PMIs to generate the precoder for the $i$-th receiver as:

$$\mathbf{V}(i) = \mathbf{W}(i)_1 \times \mathbf{W}(i)_2 \, (2)$$

While this form of pre-coding is effective it is not optimal. Additionally the use of such direct pre-coding can fail in some cases, particular where the receivers are too close to each other.

Clearly it would be to provide a method for pre-coding which mitigates the likelihood of failures. It would also be advantageous to provide a method for pre-coding which improves transmission capacity between transmitters and receivers.

**Solution to Problem**

The present invention provides a method and a communications node for pre-coding as set out in the appended independent claims. Optional features are set out in the appended dependent claims. In an aspect of the present invention there is provided a method of precoding data transmissions in a communications node, User Equipment being located within the node's coverage area, the communications node having a predefined codebook servicing said method including the steps of:

> selecting User Equipments (UEs) from within the coverage area as candidates for precoding wherein the selection of the UEs is based on correlation values calculated for each UE within the coverage area utilising a precoder matrix generated from precoder matrix indicators reported to the communications node by each UE;
> determining correlation values for the selected UEs based on the reported precoder matrix indicator and a Channel Matrix obtained from a fixed codebook of representative channel matrices;
> selecting a Channel Matrix pair having the highest correlation values; and
> generating precoders utilising the selected Channel Matrix pair.

Suitably the predefined codebook is a 2-stage codebook and the feedback information includes a first precoder matrix indicator $PMI_1$ and second precoder matrix indicator $PMI_2$. In such cases the procoder matrix $\mathbf{W}(i)$ for reported $PMI_1$ and $PMI_2$ from each UE may be generated by $\mathbf{W}(i) = \mathbf{W}(i)_1 \times \mathbf{W}(i)_2$ where $i = 1, ..., \Phi$.

Preferably the correlation values are given by $C_{corr}(i,j) = tr\{[\mathbf{W}^H(i)\mathbf{W}(j)]^H[\mathbf{W}^H(i)\mathbf{W}(j)]\}$, where $i = 1,..., \Phi-1$, $j = i+1,..., \Phi$. The minimum correlation values may be determined by $C_{corr}(\widetilde{i},\widetilde{j}) = \min\{C_{corr}(i,j)\}$, for $(\widetilde{i},\widetilde{j}) = \arg \min\{C_{corr}(i,j)\}$.

The fixed codebook of representative channel matrices may be generated from the long term PMI codebook and short term rank PMI codebook. Suitably the fixed codebook for Rank1, $\Omega_{RANK1}$ of representative channel matrices is generated from the long term PMI codebook and short term rank#1 PMI codebook. Preferably $\Omega_{RANK1}$ contains vectors of size $N_{TX} \times 1$. Suitably Rank 2 the fixed codebook $\Omega_{RANK2}$ of representative channel matrices (CM) is generated from the long term PMI codebook and short term rank#2 PMI codebook. $\Omega_{RANK2}$ contains matrices of size $N_{TX} \times N_{RX}$.

The fixed code books $\Omega_{RANK1}$ and $\Omega_{RANK2}$ may be utilised to identify the representative channels matrices. For Rank 2 the representative channel matrices may be given by

$$\mathbf{H}(\widetilde{n}(\widetilde{i})) \in \mathbf{\Omega}_{RANK2}, \mathbf{H}(\widetilde{n}(\widetilde{j})) \in \mathbf{\Omega}_{RANK2} \quad (6)$$

with

$$\widetilde{n}(\widetilde{i}) = \arg\max_{n} tr\left\{[\mathbf{H}(n)\mathbf{W}(\widetilde{i})]^H [\mathbf{H}(n)\mathbf{W}(\widetilde{i})]\right\}$$

$$\widetilde{n}(\widetilde{j}) = \arg\max_{n} tr\left\{[\mathbf{H}(n)\mathbf{W}(\widetilde{j})]^H [\mathbf{H}(n)\mathbf{W}(\widetilde{j})]\right\}$$

$$\mathbf{H}(n) \in \mathbf{\Omega}_{RANK2}.$$

For Rank1 a search may be conducted over $\Omega_{RANK1}$ for each of the $i$-th UE, from the PMI based matrix $\mathbf{W}(i)$ for $N_{RX}$ vectors of size $N_{TX} \times 1$. These vectors may then utilised to form the channel matrix $\mathbf{H}(i)$ of size $N_{RX} \times N_{TX}$.

Suitably the correlation values for the selected UEs are calculated by

$$C(i,n) = tr\left\{[\mathbf{h}(n)^H \mathbf{W}(i)]^H [\mathbf{h}(n)^H \mathbf{W}(i)]\right\}, \quad n = 1,..., N_{vec}$$

Preferably the step of selecting a Channel Matrix having the highest correlation includes sorting the correlation values $C(i,n_1) > C(i,n_2) > ... > C(i,n_{N_{vec}})$ to identify the $N_{RX}$ largest values corresponding to $\mathbf{h}(n_1), \mathbf{h}(n_2),..., \mathbf{h}(n_{N_{RX}})$ to form the channel matrix

$$\mathbf{H}(i) = [\mathbf{h}(n_1), \mathbf{h}(n_2),..., \mathbf{h}(n_{N_{RX}})]^H .$$

The step of generating the precoders may include the steps of

a) initializing for all UEs the UE's post coder by setting $\mathbf{G}(i)_{(m=0)} = \mathbf{J}(i)$, $i = 1,..., N_{UE}$ where $\mathbf{J}(i)$ is $RI(i) \times N_{RX}$;
b) calculating the precoder $\mathbf{V}(i)_{(m+1)}$ for all UEs using $\mathbf{G}(i)_{(m)}$;
c) calculating post coder $\mathbf{G}(i)_{(m+1)}$ for all UEs using $\mathbf{V}(i)_{(m+1)}$;

d) calculating $E = \sum_{i=1}^{N_{UE}} \left\| \mathbf{G}(i)_{(m+1)} - \mathbf{G}(i)_{(m)} \right\|_F^2$ and comparing $E$ to a convergence threshold $\varepsilon$;

e) setting m=m+1 if $E \geq \varepsilon$ and repeat steps b) to d) until $\sum_{i=1}^{N_{UE}} \left\| \mathbf{G}(i)_{(m+1)} - \mathbf{G}(i)_{(m)} \right\|_F^2 < \varepsilon$; and
f) outputting the precoder $\mathbf{V}(i)_{(m+1)}$.

Suitably $\mathbf{V}(i)_{(m+1)}$ is calculated in accordance with

$$\mathbf{V}(i) = \left[ \sum_{j=1}^{N_{UE}} \mathbf{H}^H(j)\mathbf{G}^H(j)\mathbf{G}(j)\mathbf{H}(j) + \upsilon\mathbf{I} \right]^{-1} \mathbf{H}^H(i)\mathbf{G}^H(i)$$

where $\upsilon$ is the Lagrange multiplier and $\mathbf{G}(i)_{(m+1)}$ is

$$\mathbf{G}(i) = \mathbf{V}^H(i)\mathbf{H}^H(i)\left[ \sum_{j=1}^{N_{UE}} \mathbf{H}(i)\mathbf{V}(j)\mathbf{V}^H(j)\mathbf{H}^H(i) + N_o(i)\mathbf{I} \right]^{-1}$$

calculated in accordance with

where $N_0$ is the noise variance

In some embodiments of the invention the Lagrange multiplier $\upsilon$ may be calculated according to the following steps:

a) calculating singular values $\lambda_i$ of the decomposition

$$\mathbf{U}\mathbf{\Lambda}\mathbf{U}^H = \sum_{i=1}^{N_{UE}} \mathbf{H}^H(i)_{m+1}\mathbf{G}^H(i)_{m+1}\mathbf{G}(i)_{(m+1)}\mathbf{H}(i)_{(m+1)} ;$$

b) setting minimum ($\upsilon_{min}$) and maximum ($\upsilon_{max}$) values of the Lagrange multiplier $\upsilon$ based on the calculated singular values $\lambda_i$;
c) setting the Lagrange multiplier as $\upsilon = (\upsilon_{max}+\upsilon_{min})/2$;

$$\hat{P} = \sum_{i=1}^{N_{TX}} \frac{\lambda_i}{(\lambda_i + \upsilon)^2} ;$$

d) calculating
c) calculating $|\hat{P} - P|$ where $P$ is the total transmit power;
d) comparing $\hat{P} - P|$ with the convergence threshold $\varepsilon$;
e) setting $\upsilon_{max} = \upsilon$ if $|\hat{P} - P|$ is greater than $\varepsilon$ and if $\hat{P}$ is less than P;
f) setting $\upsilon_{min} = \upsilon$ if $|\hat{P} - P|$ is greater than $\varepsilon$ and if $\hat{P}$ is greater than P;
g) repeating steps c) to f) until $|\hat{P} - P| < \varepsilon$ and outputting the Lagrange multiplier $\upsilon$.

In some embodiments of the invention the noise variance $N_0(i)$ may be calculated by calculating the Signal to Interference plus Noise Ratio SINR $(i,l)$ for all UEs based on the SINR threshold contained in the Channel Quality Indicator (CQI) table and then calculating the noise variance $N_0(i)$ for all UEs in accordance with the following:

$$N_o(i) = \frac{P / N_{UE}}{\sum_{l=1}^{RI} SINR(i,l) / RI(i)}, \quad i = 1,...,N_{UE}$$

In some embodiments of the invention $\mathbf{G}(i)_{(m+1)}$ may be calculated in accordance with $G(i) = \mathbf{V}^H(i)\mathbf{H}^H(i)[\mathbf{H}(i)\mathbf{V}(i)\mathbf{V}^H(i)\mathbf{H}^H(i)+N_o(i)\mathbf{I}]^{-1}$ and the noise variance may be fixed to $N_o(i) = 0, i = 1,...,N_{UE}$.

The reference to any prior art in this specification is not, and should not be taken as an acknowledgement or any form of suggestion that the prior art forms part of the common general knowledge.

**Advantageous Effects of Invention**

According to the example and aspect of the present invention stated above, it is possible to provide a method for pre-coding which mitigates the likelihood of failures and it is also possible to provide a method for pre-coding which improves transmission capacity between transmitters and receivers.

**Brief Description of Drawings**

In order that this invention may be more readily understood and put into practical effect, reference will now be made to the accompanying drawings, which illustrate preferred embodiments of the invention, and wherein:

[Fig. 1]
Fig. 1 is a schematic diagram general MU-MIMO system where the eNodeB transmits data to different UEs on the same time-frequency from multiple transmit antennas;
[Fig. 2]
Fig. 2 is a schematic diagram depicting one possible transmission mechanism with UE feedback utilised by the transmitter of Fig. 1 to transmit data to different receivers;
[Fig. 3]

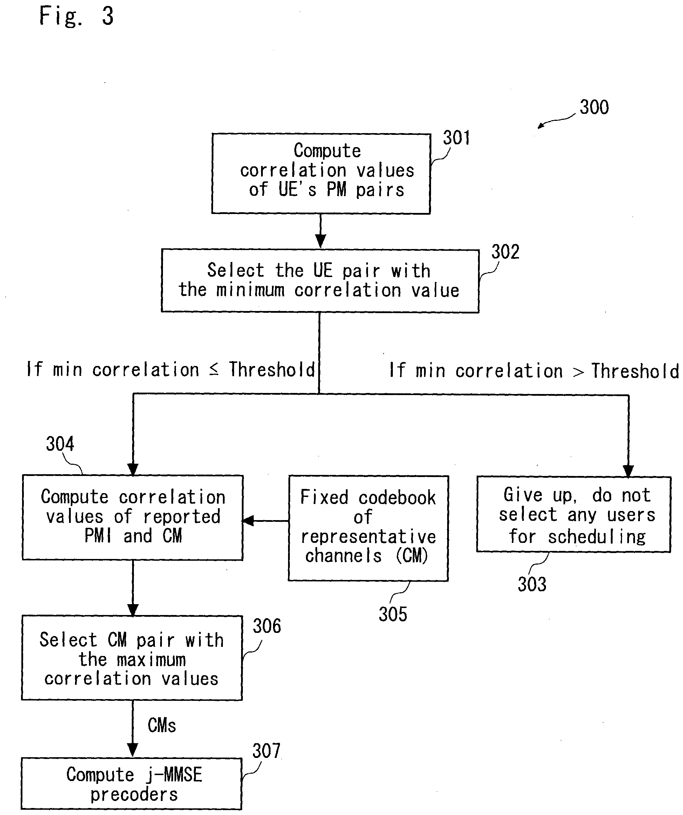

Fig. 3 is a flow chart depicting the process of User Equipment (UE) selection and precoding according to one embodiment of the present invention;
[Fig. 4]

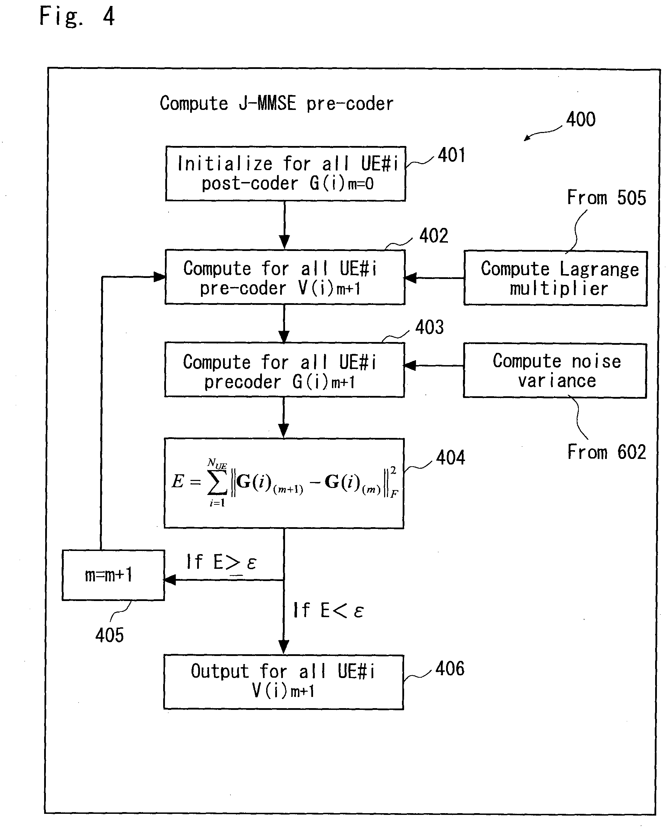

Fig. 4 is a flow chart depicting the process of producing precoders;
[Fig. 5]

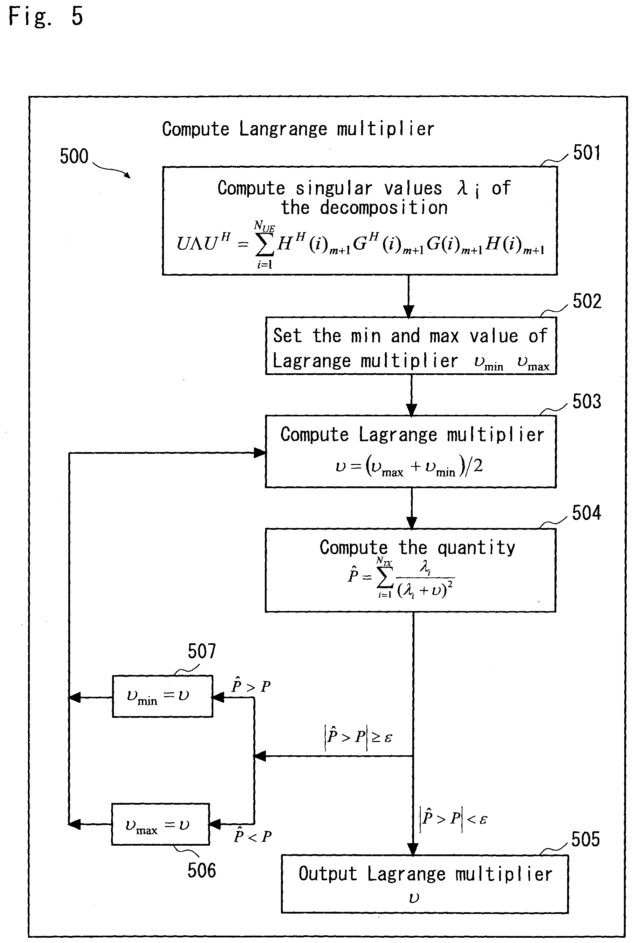

Fig. 5 is a flow chart depicting the process computing Lagrange multiplier for use in the production of the precoders as depicted in Fig. 4;
[Fig. 6]

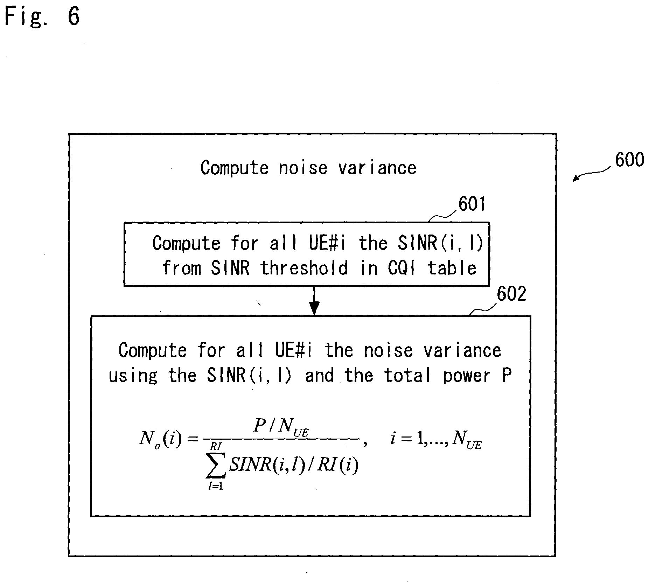

Fig. 6 is a flow chart depicting the process computing noise variance for use in the production of the precoders as depicted in Fig. 4 according to one embodiment of the present invention.

**Description of Embodiments**

As will be appreciated by those of skill in the art in a MU-MIMO transmission scheme precoding is often applied based on the channel feedback received from UEs, including a channel rank indicator (RI), channel quality indicator (CQI), and precoding matrix indicator (PMI). The RI indicates the estimated number of simultaneous layers which can be received by the UE. One or more layers can be mapped to the same codeword and are jointly encoded for transmission to the target UE. In 3GPP LTE/LTE Advanced, different codebooks have been defined depending on the number of transmit antenna ports, and they provide precoding support for simultaneous transmission of variable number of layers (data stream) to the same target UE. For simplicity and ease of discussion the following description focuses on the case of two UEs and 2-stage codebook of PMI.

With reference to Fig. 3 there is illustrated a process for User Equipment selection and precoding 300 according to one embodiment of the present invention. As shown the correlation values for of the UEs Precoder Matrix pairs are firstly calculated 301. The Precoder Matrix (PM) being taken from the LTE codebook indexed at the UE's reported PMI. The UE pair with the minimum correlation value is then selected for further processing 302.

In the present example the selection of the UE pair with minimum correlation value is performed as follows. Let $\mathbf{W}(i)$ denote the precoder matrix corresponding to the reported PMI#1 and PMI#2 of the $i$-th UE ($i = 1,..., \Phi$). Then

$$\mathbf{W}(i) = \mathbf{W}(i)_1 \times \mathbf{W}(i)_2 \quad (3)$$

The correlation values can be calculated per equation (4) below

$$C_{corr}(i,j) = tr\left\{\left[\mathbf{W}^H(i)\mathbf{W}(j)\right]^H \left[\mathbf{W}^H(i)\mathbf{W}(j)\right]\right\} i = 1,...,\Phi-1, j = i+1,...,\Phi \quad (4)$$

The minimum correlation values are then provided by the following

$$C_{corr}(\tilde{i},\tilde{j}) = \min\{C_{corr}(i,j)\},$$
$$(\tilde{i},\tilde{j}) = \arg\min\{C_{corr}(i,j)\}. \quad (5)$$

The minimum correlation values are then compared against a correlation threshold $T$. If the minimum correlation value is greater than the threshold $T$ i.e. $C_{corr}(\tilde{i},\tilde{j}) > T$ then the $(\tilde{i},\tilde{j})$ pair are not selected as pair for scheduling/precoding and the process is terminated 303. If the minimum correlation value is less than the correlation threshold $T$ i.e., $C_{corr}(\tilde{i},\tilde{j}) \leq T$ the correlation values of the reported PMI and CM are then calculated 304.

The representative channel matrices (CM) in this instance are obtained utilising the fixed codebook of representative channels 305. The fixed codebook of representative channels differs for the rank. For Rank 1 the fixed codebook $\Omega_{RANK1}$ of representative channel matrices is generated from the long term PMI codebook and short term rank#1 PMI

codebook. $\Omega_{RANK1}$ contains vectors of size $N_{TX}\times1$. For Rank 2 the fixed codebook $\Omega_{RANK2}$ of representative channel matrices (CM) is generated from the long term PMI codebook and short term rank#2 PMI codebook. $\Omega_{RANK2}$ contains matrices of size $N_{TX}\times N_{RX}$.

The fixed code books $\Omega_{RANK1}$ and $\Omega_{RANK2}$ are utilised to identify the representative channels matrices. For Rank 2 the representative channel matrices is given by

$$\mathbf{H}(\widetilde{n}(\widetilde{i})) \in \mathbf{\Omega}_{RANK2}, \mathbf{H}(\widetilde{n}(\widetilde{j})) \in \mathbf{\Omega}_{RANK2} \quad (6)$$

with

$$\widetilde{n}(\widetilde{i}) = \arg\max_n tr\left\{\left[\mathbf{H}(n)\mathbf{W}(\widetilde{i})\right]^H \left[\mathbf{H}(n)\mathbf{W}(\widetilde{i})\right]\right\}$$

$$\widetilde{n}(\widetilde{j}) = \arg\max_n tr\left\{\left[\mathbf{H}(n)\mathbf{W}(\widetilde{j})\right]^H \left[\mathbf{H}(n)\mathbf{W}(\widetilde{j})\right]\right\}$$

$$\mathbf{H}(n) \in \mathbf{\Omega}_{RANK2}.$$

For Rank1 a search is conducted over $\Omega_{RANK1}$ for each of the $i$-th UE, from the PMI based matrix $\mathbf{W}(i)$ for $N_{RX}$ vectors of size $N_{TX}\times1$. These vectors are then utilised to form the channel matrix $\mathbf{H}(i)$ of size $N_{RX}\times N_{TX}$.

Once the representative channel matrices are identified the correlation values are then calculated in accordance with the following

$$C(i,n) = tr\left\{\left[\mathbf{h}(n)^H \mathbf{W}(i)\right]^H \left[\mathbf{h}(n)^H \mathbf{W}(i)\right]\right\} \quad n = 1,..., N_{vec} \quad (7)$$

The correlation values are then sorted to find the $N_{RX}$ largest correlation values $C(i,n_1)> C(i,n_2) >...>C(i,n_{N_{RX}})$ corresponding to $\mathbf{h}(n_1),\mathbf{h}(n_2),..., \mathbf{h}(n_{N_{RX}})$ to form a channel matrix

$$\mathbf{H}(i) = \left[\mathbf{h}(n_1),\mathbf{h}(n_2),...,\mathbf{h}(n_{N_{RX}})\right]^H (8)$$

The Channel Matrix pairs having the maximum correlation values are then selected 306 and the precoders then calculated 307 utilising values for $N_o(\widetilde{i})$, $N_o(\widetilde{j})$ are then calculated using $CQI(\widetilde{i},l)$, $CQI(\widetilde{j},l)$ (discussed in greater detail below). Then utilising the values for $N_o(\widetilde{i})$, $N_o(\widetilde{j})$ and $\mathbf{H}(\widetilde{n}(\widetilde{i}))$, $\mathbf{H}(\widetilde{n}(\widetilde{j}))$ with Lagrange multiplier (discussed in greater detail below) values for the precoders $\mathbf{V}(\widetilde{i})$, $\mathbf{V}(\widetilde{j})$ computed.

In this instance the resultant precoders are Minimum Mean Squared Error (MMSE) pecoders which are computed based on the PMI feedback. Consequently information on the channels is not required to produce the precoders. A more detailed discussion of the generation of the MMSE precoders in accordance with an embodiment of the present invention is discussed with respect to Fig. 4 below.

With reference to Fig. 4 there is illustrated one process for generating the MMSE precoders according to one embodiment of the present invention. The precoder is generated by firstly initializing the post coder for all UEs 401 as follows:

$$\mathbf{G}(i)_{(m=0)} = \mathbf{J}(i), \quad i = 1,..., N_{UE} \quad .$$

Here $\mathbf{J}(i)$ is the matrix $RI(i)\times N_{RX}$ with the $(a,b)$-th element being zero for $a \neq b$ and being 1 for $a = b$ and $(m)$ denotes the $m$-th iteration. The precoder $\mathbf{V}(i)_{(m+1)}$ is then computed for all UEs 402 using $\mathbf{G}(i)_{(m)}$ for $i = 1,..., N_{UE}$. and the following equation:

$$\mathbf{V}(i) = \left[ \sum_{j=1}^{N_{UE}} \mathbf{H}^H(j)\mathbf{G}^H(j)\mathbf{G}(j)\mathbf{H}(j) + \upsilon\mathbf{I} \right]^{-1} \mathbf{H}^H(i)\mathbf{G}^H(i) \quad (9)$$

In equation 9 the variable $\upsilon$ is the Lagrange multiplier obtained form step 505 in Fig. 5 which is discussed in greater detail below.

The process then proceeds to compute for all UEs the post coder $\mathbf{G}(i)_{(m+1)}$ 403 using $\mathbf{V}(i)_{(m+1)}$ for $i = 1,...,N_{UE}$ in accordance with the following equation.

$$\mathbf{G}(i) = \mathbf{V}^H(i)\mathbf{H}^H(i) \left[ \sum_{j=1}^{N_{UE}} \mathbf{H}(i)\mathbf{V}(j)\mathbf{V}^H(j)\mathbf{H}^H(i) + N_o(i)\mathbf{I} \right]^{-1} \quad (10)$$

For less complexity, the post coder $\mathbf{G}(i)_{(m+1)}$ for each UE can be calculated using the following:

$$\mathbf{G}(i) = \mathbf{V}^H(i)\mathbf{H}^H(i) \left[ \mathbf{H}(i)\mathbf{V}(i)\mathbf{V}^H(i)\mathbf{H}^H(i) + N_o(i)\mathbf{I} \right]^{-1} \quad (11)$$

In the case of equations 10 and 11 $N_0(i)$ is the noise variance obtained form step 602 in Fig. 6. The computation of the noise variance is discussed in greater detail below.

The process then computes $E = \sum_{i=1}^{N_{UE}} \left\| \mathbf{G}(i)_{(m+1)} - \mathbf{G}(i)_{(m)} \right\|_F^2$ 404, here $\| \cdot \|_F^2$ denotes Frobenius norm. The process then determines if E is greater than or equal to the convergent threshold $\varepsilon$ i.e. $E \geq \varepsilon$. If $E \geq \varepsilon$ then the process increments m 405 and repeats the calculations for $\mathbf{V}(i)_{(m+1)}$ and $\mathbf{G}(i)_{(m+1)}$ per steps 402, 403 to again calculate the value of E. This process is then repeated until $\sum_{i=1}^{N_{UE}} \left\| \mathbf{G}(i)_{(m+1)} - \mathbf{G}(i)_{(m)} \right\|_F^2 < \varepsilon$ at which stage the precoder $\mathbf{V}(i)_{(m+1)}$ is outputted 406.

As can be seen form the above discussion the calculation of the precoder $\mathbf{V}(i)_{(m+1)}$ requires the use of a Lagrange multiplier $\upsilon$. The process of computing the Lagrange multiplier $\upsilon$ 500 is shown in Fig. 5. As shown singular values $\lambda_i$ of

the decomposition $\mathbf{U}\boldsymbol{\Lambda}\mathbf{U}^H = \sum_{i=1}^{N_{UE}} \mathbf{H}^H(i)_{m+1}\mathbf{G}^H(i)_{m+1}\mathbf{G}(i)_{(m+1)}\mathbf{H}(i)_{(m+1)}$ are computed 501. The minimum and maximum value of the Lagrange multiplier $\upsilon_{max}\upsilon_{min}$ are then set 502. The Lagrange multiplier is then set 503 as $\upsilon = (\upsilon_{max} + \upsilon_{min})/2$.

Once the Lagrange multiplier has been set the quantity $\hat{P} = \sum_{i=1}^{N_{TX}} \dfrac{\lambda_i}{(\lambda_i + \upsilon)^2}$ is then calculated 504. The process then proceeds to calculate the absolute value $\hat{P}$ less the total transmit power P which is then compared with the convergence threshold $\varepsilon$. If the absolute value of is less than $\varepsilon$ i.e. $|\hat{P} - P| \geq \varepsilon$ the value of $\hat{P}$ is compared with the value of P, if $\hat{P}$ is less than P then $\upsilon_{max} = \upsilon$ 506 before resetting the Lagrange multiplier per step 503. If $\hat{P}$ is greater than P then $\upsilon_{min} = \upsilon$ 507 before resetting the Lagrange multiplier per step 503.

The steps of setting the Lagrange multiplier 503, calculation of $\hat{P}$ 504 and setting $\upsilon_{max} = \upsilon$ 506 or $\upsilon_{min} = \upsilon$ are repeated until $|\hat{P} - P| < \varepsilon$ at which stage the Lagrange multiplier $\upsilon$ 505 for use in the calculation of the precoder $\mathbf{V}(i)_{(m+1)}$ at step 402 of Fig. 4.

In addition to the use of the Lagrange multiplier the process of generating the pre-coder information on the noise variance $N_0(i)$ is also required. Fig. 6 show one possible procedure for the calculation of the noise variance $N_0(i)$ 600 according to one embodiment of the present invention. As shown the Signal to Interference plus Noise Ratio for all UEs SINR $(i,l)$ is calculated 601 based on the SINR threshold contained in the Channel Quality Indicator (CQI) table. The SINR $(i,l)$ is then utilised in conjunction the total power P to calculate the noise variance $N_0(i)$ for all UEs in accordance with the following:

$$N_o(i) = \frac{P / N_{UE}}{\sum_{l=1}^{RI} SINR(i,l) / RI(i)}, \quad i = 1,...,N_{UE}$$

For less complexity, the noise variance can be fixed to zero i.e. $N_0(i)= 0$, $i = 1,...,N_{UE}$ in either case the value for $N_0(i)$ is then utilised in the calculation of $\mathbf{G}(i)_{(m+1)}$ at step 403 of the precoder calculation process discussed in relation to Fig. 4 above.

As can be seen form the above discussion the present invention provides MMSE precoders based on the joint transmit & receive optimization method in which utilises the PMI feedback. While the above examples have for the purposes of simplicity and ease of discussion focused on the case of two UEs and 2-stage codebook of PMI it will be appreciated by those of skill in the art that the proposed processes for the generation of precoders is not limited to the case of two UEs and 2-stage codebook of PMI and could be easily expanded to cover cases including multiple UEs and higher stage code books.

It is to be understood that the above embodiments have been provided only by way of exemplification of this invention.

This application is based upon and claims the benefit of priority from Australian Patent Application No. 2012904070, filed on September 18, 2012.

**Reference Signs List**

| 100 | MU-MIMO system |
|---|---|
| 101 | transmitter |
| 102, 103 | receiver |
| 200 | transmission mechanism |
| 201 | transmit data |
| 202 | channel status information |

**Claims**

1. A method of precoding data transmissions in a communications node (101), User Equipment (102, 103) being located within the node's coverage area, the communications node (101) having a predefined codebook servicing said method comprising:

    selecting User Equipments, UEs (102, 103), from within the coverage area as candidates for precoding wherein the selection of the UEs (102, 103) is based on correlation values calculated for each UE (102, 103)within the coverage area utilising a precoder matrix generated from precoder matrix indicators reported to the communications node by each UE (102, 103);
    determining correlation values for the selected UEs (102, 103) based on the reported precoder matrix indicator and a Channel Matrix obtained from a fixed codebook of representative channel matrices;
    selecting a Channel Matrix pair having the highest correlation values; and
    generating precoders utilising the selected Channel Matrix pair.

2. The method of claim 1 wherein the predefined codebook is a 2-stage codebook and the precoder matrix indicator includes a first precoder matrix indicator $PMI_1$ and second precoder matrix indicator $PMI_2$.

3. The method of claim 2 wherein the procoder matrix W(i) for reported $PMI_1$ and $PMI_2$ from each UE (102, 103) is generated by $\mathbf{W}(i) = \mathbf{W}(i)_1 \times \mathbf{W}(i)_2$ where $i = 1,...,\Phi$, and $\Phi$ is the number of UEs.

4. The method of claim 3 wherein the correlation values are given by $C_{corr}(i,j) = tr\{[\mathbf{W}^H(i)\mathbf{W}(j)]^H[\mathbf{W}^H(i)\mathbf{W}(j)]\}$, for $i = 1,...,\Phi-1$, $j = i+1,...,\Phi$.

5. The method of claim 4 wherein
    the step of selecting UEs (102, 103) is a step of selecting one or more pairs of UEs (102, 103) having minimum correlation values, and
the minimum correlation values are given by

$$C_{corr}(\tilde{i},\tilde{j}) = \min\{C_{corr}(i,j)\},$$

where $(\tilde{i},\tilde{j}) = \arg_{\min}\{C_{corr}(i,j)\}$.

6. The method of any one of claims 1 to 5 wherein the fixed codebook of representative channel matrices is generated from a long term PMI codebook and short term rank PMI codebook.

7. The method of claim 6 wherein the correlation values for the selected UEs (102, 103) are calculated by

$$C(i,n) = tr\left\{\left[\mathbf{h}(n)^H \mathbf{W}(i)\right]^H \left[\mathbf{h}(n)^H \mathbf{W}(i)\right]\right\}, \ n = 1,\ldots,N_{vec}.$$

8. The method of claim 7 wherein the step of selecting a Channel Matrix pair having the highest correlation includes sorting the correlation values $C(i,n_1) > C(i,n_2) > \ldots > C(i,n_{N_{vec}})$ to identify the $N_{RX}$ largest values corresponding to $\mathbf{h}(n_1),\mathbf{h}(n_2),\ldots,\mathbf{h}(n_{N_{RX}})$ to form the channel matrix

$$\mathbf{H}(i) = \left[\mathbf{h}(n_1),\mathbf{h}(n_2),\ldots,\mathbf{h}(n_{N_{RX}})\right]^H.$$

9. The method of claim 8 wherein the step of generating the precoders includes the steps of:

a) initializing for all UEs (102, 103) the UE's post coder by setting $\mathbf{G}(i)_{(m=0)} = \mathbf{J}(i), i = 1,\ldots,N_{UE}$ where $\mathbf{J}(i)$ is $RI(i) \times N_{RX}$;
b) calculating the precoder $\mathbf{V}(i)_{(m+1)}$ for all UEs using $\mathbf{G}(i)_{(m)}$;
c) calculating post coder $\mathbf{G}(i)_{(m+1)}$ for all UEs using $\mathbf{V}(i)_{(m+1)}$;
d) calculating $E = \sum_{i=1}^{N_{UE}} \left\|\mathbf{G}(i)_{(m+1)} - \mathbf{G}(i)_{(m)}\right\|_F^2$ and comparing E to a convergence threshold $\varepsilon$;
e) setting m=m+1 if $E \geq \varepsilon$ and repeat steps b) to d) until

$$\sum_{i=1}^{N_{UE}} \left\|\mathbf{G}(i)_{(m+1)} - \mathbf{G}(i)_{(m)}\right\|_F^2 < \varepsilon \ ;$$

and
f) outputting the precoder $\mathbf{V}(i)_{(m+1)}$.

10. The method of claim 9 wherein $\mathbf{V}(i)_{(m+1)}$ is calculated in accordance with

$$\mathbf{V}(i) = \left[\sum_{j=1}^{N_{UE}} \mathbf{H}^H(j)\mathbf{G}^H(j)\mathbf{G}(j)\mathbf{H}(j) + \upsilon\mathbf{I}\right]^{-1} \mathbf{H}^H(i)\mathbf{G}^H(i)$$

where $\upsilon$ is the Lagrange multiplier and $\mathbf{G}(i)_{(m+1)}$

$$\mathbf{G}(i) = \mathbf{V}^H(i)\mathbf{H}^H(i)\left[\sum_{j=1}^{N_{UE}} \mathbf{H}(i)\mathbf{V}(j)\mathbf{V}^H(j)\mathbf{H}^H(i) + N_o(i)\mathbf{I}\right]^{-1}$$

is calculated in accordance with where $N_0$ is the noise variance.

11. A communications node (101) configured to communicate with User Equipment (102, 103) being located within the node's coverage area, the communications node (101) having a predefined codebook, and being **characterized in that** the communications node (101) is configured to perform the method of any of claims 1 to 10.

**Patentansprüche**

1. Verfahren zum Vorcodieren von Datenübertragungen in einem Kommunikationsknoten (101), wobei ein Benutzergerät (102, 103) sich innerhalb des Abdeckungsbereichs des Knotens befindet, wobei der Kommunikationsknoten (101) ein vordefiniertes Codebuch aufweist, welches dem Verfahren dient, das Folgendes aufweist:

   Auswählen von Benutzergeräten (UE) (102, 103) aus dem Abdeckungsbereich als Kandidaten zur Vorcodierung, wobei die Auswahl der UE (102, 103) auf Korrelationswerten beruht, die für jedes UE (102, 103) innerhalb des Abdeckungsbereichs unter Verwendung einer Vorcodiermatrix berechnet werden, die anhand Vorcodiermatrixindikatoren erzeugt wird, die dem Kommunikationsknoten durch jedes UE (102, 103) mitgeteilt werden,
   Bestimmen von Korrelationswerten für die ausgewählten UE (102, 103) auf der Grundlage des mitgeteilten Vorcodiermatrixindikators und einer Kanalmatrix, die von einem festen Codebuch repräsentativer Kanalmatrizen erhalten wurde,
   Auswählen eines Kanalmatrixpaars mit den höchsten Korrelationswerten und
   Erzeugen von Vorcodierern unter Verwendung des ausgewählten Kanalmatrixpaars.

2. Verfahren nach Anspruch 1, wobei das vordefinierte Codebuch ein zweistufiges Codebuch ist und der Vorcodiermatrixindikator einen ersten Vorcodiermatrixindikator $PMI_1$ und einen zweiten Vorcodiermatrixindikator $PMI_2$ einschließt.

3. Verfahren nach Anspruch 2, wobei die Vorcodiermatrix W(i) für die von jedem UE (102, 103) mitgeteilten $PMI_1$ und $PMI_2$ durch $W(i) = W(i)_1 \times W(i)_2$ erzeugt wird, wobei $i = 1,...,\Phi$ ist und $\Phi$ die Anzahl der UE ist.

4. Verfahren nach Anspruch 3, wobei die Korrelationswerte durch $C_{corr}(i,j) = tr\{[\mathbf{W}^H(i)\mathbf{W}(j)]^H[\mathbf{W}^H(i)\mathbf{W}(j)]\}$, für $i = 1,...,\Phi - 1$, $j = i + 1,...,\Phi$. gegeben sind.

5. Verfahren nach Anspruch 4, wobei
   der Schritt des Auswählens der UE (102, 103) ein Schritt zum Auswählen eines oder mehrerer UE-Paare (102, 103) mit minimalen Korrelationswerten ist und die minimalen Korrelationswerte durch $C_{corr}(\tilde{i},\tilde{j}) = \min\{C_{corr}(i,j)\}$ gegeben sind, wobei $(\tilde{i},\tilde{j}) = \arg \min\{C_{corr}(i,j)\}$ ist.

6. Verfahren nach einem der Ansprüche 1 bis 5, wobei das feste Codebuch repräsentativer Kanalmatrizen anhand eines Langzeit-PMI-Codebuchs und eines Kurzzeit-Rang-PMI-Codebuchs erzeugt wird.

7. Verfahren nach Anspruch 6, wobei die Korrelationswerte für die ausgewählten UE (102, 103) durch $C(i,n) = tr\{[\mathbf{h}(n)^H\mathbf{W}(i)]^H[\mathbf{h}(n)^H\mathbf{W}(i)]\}$, $n = 1,...,N_{vec}$ berechnet werden.

8. Verfahren nach Anspruch 7, wobei der Schritt des Auswählens eines Kanalmatrixpaars mit der höchsten Korrelation das Sortieren der Korrelationswerte $C(i,n_1) > C(i,n_2) >...> C(i,n_{N_{vec}})$ zur Identifikation der $N_{RX}$ größten Werte, die $\mathbf{h}(n_1),\mathbf{h}(n_2),...,\mathbf{h}(n_{N_{RX}})$ entsprechen, aufweist, um die Kanalmatrix $\mathbf{H}(i) = [\mathbf{h}(n_1),\mathbf{h}(n_2),...,\mathbf{h}(n_{N_{RX}})]^H$ zu bilden.

9. Verfahren nach Anspruch 8, wobei der Schritt des Erzeugens der Vorcodierer folgende Schritte aufweist:

   a) Initialisieren des UE-Nachcodierers für alle UE (102, 103) durch Setzen von $\mathbf{G}(i)_{(m=0)} = \mathbf{J}(i), i=1,...,N_{UE}$, wobei $\mathbf{J}(i)$ $RI(i) \times N_{RX}$ ist,
   b) Berechnen des Vorcodierers $\mathbf{V}(i)_{(m+1)}$ für alle UE unter Verwendung von $\mathbf{G}(i)_{(m)}$,
   c) Berechnen des Nachcodierers $\mathbf{G}(i)_{(m+1)}$ für alle UE unter Verwendung von $\mathbf{V}(i)_{(m+1)}$,

   $$E = \sum_{i=1}^{N_{UE}} \left\| \mathbf{G}(i)_{(m+1)} - \mathbf{G}(i)_{(m)} \right\|_F^2$$

   d) Berechnen von                                         und Vergleichen von E für eine Konvergenzschwelle $\varepsilon$,
   e) Setzen von m = m + 1, falls E $\geq \varepsilon$ ist, und Wiederholen der Schritte b) bis d), bis

   $$\sum_{i=1}^{N_{UE}} \left\| \mathbf{G}(i)_{(m+1)} - \mathbf{G}(i)_{(m)} \right\|_F^2 < \varepsilon$$

   und
   f) Ausgeben des Vorcodierers $\mathbf{V}(i)_{(m+1)}$.

**10.** Verfahren nach Anspruch 9, wobei $\mathbf{V}(i)_{(m+1)}$ nach

$$\mathbf{V}(i) = \left[ \sum_{j=1}^{N_{UE}} \mathbf{H}^H(j)\mathbf{G}^H(j)\mathbf{G}(j)\mathbf{H}(j) + \upsilon\mathbf{I} \right]^{-1} \mathbf{H}^H(i)\mathbf{G}^H(i)$$

berechnet wird, wobei v der Lagrange-Multiplikator ist und G($i)_{(m+1)}$ nach

$$\mathbf{G}(i) = \mathbf{V}^H(i)\mathbf{H}^H(i) \left[ \sum_{j=1}^{N_{UE}} \mathbf{H}(i)\mathbf{V}(j)\mathbf{V}^H(j)\mathbf{H}^H(i) + N_o(i)\mathbf{I} \right]^{-1}$$

berechnet wird, wobei $N_0$ die Rauschvarianz ist.

**11.** Kommunikationsknoten (101), der dafür ausgelegt ist, mit einem Benutzergerät (102, 103) zu kommunizieren, das sich innerhalb des Abdeckungsbereichs des Knotens befindet, wobei der Kommunikationsknoten (101) ein vordefiniertes Codebuch aufweist und **dadurch gekennzeichnet ist, dass** der Kommunikationsknoten (101) dafür ausgelegt ist, das Verfahren nach einem der Ansprüche 1 bis 10 auszuführen.

**Revendications**

**1.** Procédé de précodage de transmissions de données dans un noeud de communication (101), un équipement utilisateur (102, 103) étant situé au sein de la zone de couverture du noeud, le noeud de communication (101) ayant un livre de codes prédéfini pour mettre en oeuvre ledit procédé, comprenant :

la sélection d'équipements utilisateurs, UE (102, 103), dans la zone de couverture comme candidats de précodage, où la sélection des UE (102, 103) est basée sur des valeurs de corrélation calculées pour chaque UE (102, 103) au sein de la zone de couverture à l'aide d'une matrice de précodeur générée à partir d'indicateurs de matrice de précodeur signalés au noeud de communication par chaque UE (102, 103) ;
la détermination de valeurs de corrélation pour les UE (102, 103) sélectionnés sur la base de l'indicateur de matrice de précodeur signalé et d'une matrice de canal obtenue à partir d'un livre de codes fixe de matrices de canal représentatives ;
la sélection d'une paire de matrices de canal ayant les valeurs de corrélation les plus élevées ; et
la génération de précodeurs à l'aide de la paire de matrices de canal sélectionnée.

**2.** Procédé selon la revendication 1, dans lequel le livre de codes prédéfini est un livre de codes à deux étages et l'indicateur de matrice de précodeur comporte un premier indicateur de matrice de précodeur $PMI_1$ et un second indicateur de matrice de précodeur $PMI_2$.

**3.** Procédé selon la revendication 2, dans lequel la matrice de précodeur W(i) pour les $PMI_1$ et $PMI_2$ signalés par chaque UE (102, 103) est générée par $W(i) = W(i)_1 \times W(i)_2$ où $i = 1, ..., \Phi$, et $\Phi$ est le nombre d'UE.

**4.** Procédé selon la revendication 3, dans lequel les valeurs de corrélation sont données par

$$C_{corr}(i,j) = tr\left\{ \left[ \mathbf{W}^H(i)\mathbf{W}(j) \right]^H \left[ \mathbf{W}^H(i)\mathbf{W}(j) \right] \right\},$$

pour $i = 1,...,\Phi-1$, $j = i+1,...,\Phi$.

**5.** Procédé selon la revendication 4, dans lequel
l'étape de sélection d'UE (102, 103) est une étape de sélection d'une ou de plusieurs paires d'UE (102, 103) ayant des valeurs de corrélation minimales, et
les valeurs de corrélation minimales sont données par

$$C_{corr}(\tilde{i}, \tilde{j}) = \min\{C_{corr}(i,j)\}, \quad \text{où} \quad (\tilde{i}, \tilde{j}) = \arg\min\{C_{corr}(i,j)\}.$$

**6.** Procédé selon l'une quelconque des revendications 1 à 5, dans lequel le livre de codes fixe de matrices de canal représentatives est généré à partir d'un livre de codes PMI à long terme et d'un livre de codes PMI de rang à court terme.

**7.** Procédé selon la revendication 6, dans lequel les valeurs de corrélation pour les UE (102, 103) sélectionnés sont calculées par

$$C(i,n) = tr\left\{\left[\mathbf{h}(n)^H \mathbf{W}(i)\right]^H \left[\mathbf{h}(n)^H \mathbf{W}(i)\right]\right\}, \ n = 1,...,N_{vec}.$$

**8.** Procédé selon la revendication 7, dans lequel l'étape de sélection d'une paire de matrices de canal ayant la corrélation la plus élevée comporte le tri des valeurs de corrélation $C(i,n_1) > C(i,n_2) > ... > C(i,n_{N_{vec}})$ pour identifier les $N_{RX}$ valeurs les plus grandes correspondant à $\mathbf{h}(n_1), \mathbf{h}(n_2),...,\mathbf{h}(n_{N_{RX}})$ pour former la matrice de canal $\mathbf{H}(i) = [\mathbf{h}(n_1), \mathbf{h}(n_2),...,\mathbf{h}(n_{N_{RX}})]^H$.

**9.** Procédé selon la revendication 8, dans lequel l'étape de génération des précodeurs comporte les étapes de :

a) initialisation pour tous les UE (102, 103) du post-codeur de l'UE en établissant $\mathbf{G}(i)_{(m=0)} = \mathbf{J}(i), i = 1,...,N_{UE}$ où $\mathbf{J}(i)$ est $RI(i) \times N_{RX}$ ;
b) calcul du précodeur $V(i)_{(m+1)}$ pour tous les UE à l'aide de $\mathbf{G}(i)_{(m)}$ ;
c) calcul du post-codeur $\mathbf{G}(i)_{(m+1)}$ pour tous les UE à l'aide de $\mathbf{V}(i)_{(m+1)}$ ;

$$E = \sum_{i=1}^{N_{UE}} \left\| \mathbf{G}(i)_{(m+1)} - \mathbf{G}(i)_{(m)} \right\|_F^2$$

d) calcul de                                        et comparaison de E à un seuil de convergence $\varepsilon$ ;
e) établissement de m = m + 1 si E ≥ ε et répétition des étapes b) à d) jusqu'à ce que

$$\sum_{i=1}^{N_{UE}} \left\| \mathbf{G}(i)_{(m+1)} - \mathbf{G}(i)_{(m)} \right\|_F^2 < \varepsilon$$
; et

f) fourniture en sortie du précodeur $\mathbf{V}(i)_{(m+1)}$.

**10.** Procédé selon la revendication 9, dans lequel $\mathbf{V}(i)_{(m+1)}$ est calculé conformément à

$$\mathbf{V}(i) = \left[ \sum_{j=1}^{N_{UE}} \mathbf{H}^H(j)\mathbf{G}^H(j)\mathbf{G}(j)\mathbf{H}(j) + \upsilon\mathbf{I} \right]^{-1} \mathbf{H}^H(i)\mathbf{G}^H(i)$$

où $\upsilon$ est le multiplicateur de Lagrange et

$$\mathbf{G}(i) = \mathbf{V}^H(i)\mathbf{H}^H(i) \left[ \sum_{j=1}^{N_{UE}} \mathbf{H}(i)\mathbf{V}(j)\mathbf{V}^H(j)\mathbf{H}^H(i) + N_o(i)\mathbf{I} \right]^{-1}$$

$\mathbf{G}(i)_{(m+1)}$ est calculé conformément à                                                                      où $N_0$ est la variance de bruit.

**11.** Noeud de communication (101) configuré pour communiquer avec un équipement utilisateur (102, 103) situé au sein de la zone de couverture du noeud, le noeud de communication (101) ayant un livre de codes prédéfini, et étant **caractérisé en ce que** le noeud de communication (101) est configuré pour réaliser le procédé selon l'une quelconque des revendications 1 à 10.

Fig. 1

Fig. 2

Fig. 3

300

```
┌─────────────────────┐ 301
│      Compute        │
│ correlation values  │
│   of UE's PM pairs  │
└─────────────────────┘
          │
          ▼
┌─────────────────────┐ 302
│  Select the UE pair with  │
│ the minimum correlation value │
└─────────────────────┘
```

If min correlation ≤ Threshold          If min correlation > Threshold

```
304
┌──────────────────┐      ┌──────────────────┐      ┌──────────────────┐
│ Compute correlation │◀─│  Fixed codebook  │      │  Give up, do not │
│ values of reported │    │       of         │      │ select any users │
│    PMI and CM     │    │  representative  │      │  for scheduling  │
└──────────────────┘      │  channels (CM)  │      └──────────────────┘
          │               └──────────────────┘              303
          ▼                       305
┌──────────────────┐ 306
│ Select CM pair with │
│   the maximum     │
│ correlation values │
└──────────────────┘
          │ CMs
          ▼
┌──────────────────┐ 307
│  Compute j-MMSE  │
│    precoders     │
└──────────────────┘
```

## Fig. 4

Compute J-MMSE pre-coder

400

Initialize for all UE#i
post-coder G(i)m=0 — 401

Compute for all UE#i
pre-coder V(i)m+1 — 402

From 505

Compute Lagrange
multiplier

Compute for all UE#i
precoder G(i)m+1 — 403

Compute noise
variance

From 602

$$E = \sum_{i=1}^{N_{UE}} \left\| \mathbf{G}(i)_{(m+1)} - \mathbf{G}(i)_{(m)} \right\|_F^2$$ — 404

If E ≥ ε

m=m+1 — 405

If E < ε

Output for all UE#i
V(i)m+1 — 406

Fig. 5

500

Compute Langrange multiplier

Compute singular values $\lambda_i$ of
the decomposition

$$U\Lambda U^H = \sum_{i=1}^{N_{UE}} H^H(i)_{m+1} G^H(i)_{m+1} G(i)_{m+1} H(i)_{m+1}$$

501

Set the min and max value of
Lagrange multiplier $\upsilon_{min}$ $\upsilon_{max}$

502

Compute Lagrange multiplier
$$\upsilon = (\upsilon_{max} + \upsilon_{min})/2$$

503

Compute the quantity
$$\hat{P} = \sum_{i=1}^{N_{TX}} \frac{\lambda_i}{(\lambda_i + \upsilon)^2}$$

504

507

$\upsilon_{min} = \upsilon$    $\hat{P} > P$

$\left|\hat{P} > P\right| \geq \varepsilon$

$\upsilon_{max} = \upsilon$    $\hat{P} < P$

506

$\left|\hat{P} > P\right| < \varepsilon$

Output Lagrange multiplier
$\upsilon$

505

Fig. 6

Compute noise variance

600

601

Compute for all UE#i the SINR(i, l) from SINR threshold in CQI table

602

Compute for all UE#i the noise variance using the SINR(i, l) and the total power P

$$N_o(i) = \frac{P / N_{UE}}{\sum_{l=1}^{RI} SINR(i,l) / RI(i)}, \quad i = 1,...,N_{UE}$$

EP 2 898 721 B1

## REFERENCES CITED IN THE DESCRIPTION

**Patent documents cited in the description**

- CA 2815711 A1
- WO 2012065278 A1
- US 2010322176 A1
- US 2011194593 A1
- US 2010034146 A1
- US 2008165883 A1
- US 2012093089 A1
- AU 2012904070